# EUROPEAN PATENT SPECIFICATION

(11) **EP 1 924 422 B1**
(45) Date of publication and mention of the grant of the patent: **11.03.2009**
(21) Application number: 06778541.0
(22) Date of filing: 17.08.2006
(51) Int. Cl.: B29C 53/60

(54) **APPARATUS AND METHOD FOR CONTINUOUS MANUFACTURE OF A MINERAL WOOL PIPE SECTION FOR INSULATING PURPOSES**
VORRICHTUNG UND VERFAHREN FÜR DIE KONTINUIERLICHE HERSTELLUNG EINES MINERALWOLLEROHRABSCHNITTS FÜR ISOLIERZWECKE
APPAREIL ET PROCEDE POUR PRODUIRE EN CONTINU UNE SECTION DE CONDUITE EN LAINE MINERALE UTILISEE DANS DES APPLICATIONS D'ISOLATION

(30) Priority: 19.08.2005 FI 20055440
(43) Date of publication of application: 28.05.2008
(73) Proprietor: Paroc Oy Ab, 01300 Vantaa (FI)
(72) Inventor: KARJALAINEN, Erkki, FI-53300 Lappeenranta (FI); NIKKINEN, Matti, FI-53500 Lappeenranta (FI); SKIPPARI, Sami, FI-53500 Lappeenranta (FI); BULUT, Pirkko, FI-53300 Lappeenranta (FI); MANNINEN, Jukka, FI-53500 Lappeenranta (FI); KUUKKA, Ossi, FI-53650 Lappeenranta (FI)
(74) Representative: LEITZINGER OY
(86) International application number: PCT/FI2006/050358
(87) International publication number: WO 2007/020331

(56) References cited:
- JP-A- 59 087 130
- JP-A- 61 202 828
- US-A- 3 498 862

## Description

An object of this invention is an apparatus according to claim 1.

Another object of this invention relates to a method according to claim 7.

At present, production on a pipe section processing line is typically arranged in such a way that a mat of designated length is driven around a core and the resulting intermediate product is further processed into a finished pipe section as the process proceeds. A problem in such systems is that the production process is cyclic and the products show density fluctuations and, also, the products always have a standard length. In addition, the consumption of raw material is rather considerable due to further processing of the intermediate product. Neither does such a system allow for a reduction of time per piece without extensive re-structuring.

On the other hand, the prior art does include a Finnish publication print FI 50898, which indeed describes an apparatus for continuously manufacturing a pipe section, but this apparatus is nevertheless unnecessarily complicated structurally with its multitude of moving parts and bulky construction. Features noted as particularly complicated include curing the insulation piece of a tubular pipe section preform, effected by means of a hot gas, as well as a drawing device intended for advancing a tubular insulation product along and finally off a core. The advancement of the tubular insulation product along the core, as well as the control of its density, would also seem uncertain and unreliable in this prior art solution.

It is an object of this invention to provide an apparatus and method for avoiding the foregoing drawbacks.

In order to accomplish this, the apparatus of the invention is characterized in that at least a portion of the core is screw-shaped, the advancement of a formed portion of the pipe section along the core and finally off the core taking place in response to rotational motions of both the core's screw-shaped portion and the roller assembly.

In order to avoid the foregoing drawbacks, the method of the invention is in turn characterized in that, for the purpose of advancing along and finally removing a formed portion of the pipe section from the core off its clear end, both the outer surfaces and the inner surfaces of the pipe section preform are subjected to rotational motions by using a core, at least a portion of which is screw-shaped, and a roller assembly as described above, which surrounds at least a part of the core. The roller assembly has its rollers extending lengthwise of the core along the core preferably from the head of the core (i.e. from the beginning of the screw portion) all the way to the curing section.

Various rotation speeds of the components, i.e. the core and the rollers of the roller assembly, can be used to affect the insulation thickness, as well as the density of pipe sections. Being adjustable, the rollers thereby enable providing various insulation thicknesses (wall thickness in a pipe section) for pipe sections. In addition, the feeding angle of the mat can be adjusted, thereby also making a difference in insulation thickness and density.

By way of this invention it is hence provided an apparatus for the continuous manufacture of insulating pipe sections, which apparatus is structurally much simpler than the prior art, more reliable and better in terms of density control, as well as less bulky since there is no need for an external drawing device for the pipe section preform. In addition, by using microwave irradiation as a curing method, the apparatus can be made even more simple and reliable. Even though continuous fabrication of a pipe section for insulating purposes was to a certain extent known as early as in the 1960's, we have not gained any knowledge about anyone having thought of replacing a drawing device with a core which is screw-shaped.

Preferred embodiments of the invention are characterized by what is presented in the subsequent dependent claims.

The invention will now be described more specifically by way of example with reference to the accompanying drawings, in which:
- fig. 1: shows an embodiment of an apparatus according to the invention, and
- fig. 2: shows an embodiment of an outer roller assembly according to the invention.

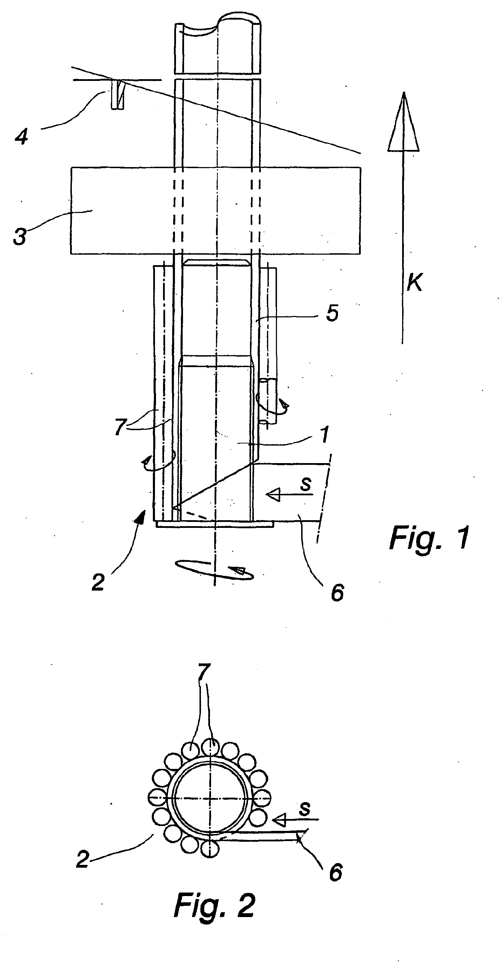

The apparatus shown in fig. 1 is capable of providing a uniform density of raw material, a nonstop feeding K of a pipe section, and a low consumption of raw material. The apparatus comprises a screw 1, an outer roller assembly 2, a curing 3, and a straight cutting off 4 of a moving piece 5. A stone wool mat 6 is supplied in a feeding direction S from a single point onto the periphery of the screw 1, and the piece 5 is provided with a desired configuration by the outer roller assembly 2 which comprises at least two, in this case 14 (see fig. 2) rollers 7 in alignment with the screw 1 or at angle of deviation relative to the screw. The mineral wool mat 6 has its feeding angle relative to the screw 1 preferably at 45-90°. The inner diameter of the piece 5 is defined by the screw's 1 outer diameter. The piece 5 advances in direction K in response to rotational motions of the screw 1 and the outer roller assembly's 2 rollers 7. The screw portion 1 extends lengthwise of the core from the core head half-way along and the rollers 7 extend from the beginning of the core all the way to the curing section 3. Both the outer roller assembly's 2 rollers 7 and the screw 1 (i.e. the core) are motor-driven. The motor-drive feature is not depicted in the figures.

Fig. 2 shows one solution for an outer roller assembly according to the invention, which includes 14 rollers 7 arranged around a core in a close proximity of each other for producing an insulating layer as high grade and uniform as possible.

The insulating piece 5 formed in fig. 1 is subjected to curing preferably by microwave irradiation.

The solution described in this example should not be interpreted in a manner that would limit the invention presented in the claims.

## Claims

1. An apparatus for the continuous manufacture of a mineral wool pipe section for insulating purposes, said apparatus comprising a core and an outer roller assembly surrounding it at least partially, said roller assembly including at least two rollers arranged to be adjustable, whereby a mineral wool mat of designated length between the core and the roller assembly is windable around the core for forming a pipe section preform, one end of the core being clear for removing a formed pipe section from the core, as well as curing elements for curing the pipe section preform prior to a removal from the core off the core's clear end, at least a portion of the core being screw-shaped, the advancement of a formed portion of the pipe section along the core and finally off the core taking place in response to rotational motions of both the core's screw-shaped portion and the rollers of the roller assembly.

2. An apparatus as set forth in claim 1, **characterized in that** curing is arranged to be performed by heating or by means of microwaves.

3. An apparatus as set forth in claim 1 or 2, **characterized in that** the apparatus comprises one or more rollers in alignment with the screw or at an angle of deviation relative to the screw.

4. An apparatus as set forth in any of claims 1-3, **characterized in that** it comprises crosswise cutting means and/or lengthwise splitting and/or cutting means.

5. An apparatus as set forth in any of claims 1-4, **characterized in that** it is provided with one or more mat feed openings for feeding a mat around the core.

6. An apparatus as set forth in any of claims 1-5, **characterized in that** the mineral wool consists of stone wool.

7. A method for the continuous forming of a mineral wool pipe section for insulating purposes, comprising
- feeding a mineral wool mat around a core, which is clear at one of its ends, in such a manner that the subsequent mat lap at least partially overlaps the preceding mat lap
- compressing the mineral mat fed around the core against the core by means of an outer roller assembly consisting of at least two adjustable rollers for producing a pipe section preform,
- curing the formed pipe section preform,
in which method for the purpose of advancing a formed portion of the pipe section and finally removing it from the core off the core's clear end, both the outer surfaces and the inner surfaces of the pipe section preform are subjected to rotational motions by using a core, at least a portion of which is screw-shaped, and the above mentioned roller assembly consisting of at least two adjustable rollers, said roller assembly surrounding at least a part of the core.

8. A method as set forth in claim 7, **characterized in that** the formed pipe section preform is cured by means of hot air and/or microwaves.

9. A method as set forth in claim 8, **characterized in that** each roller of the apparatus is in alignment with or at an angle of deviation relative to the screw.

10. A method as set forth in any of claims 7-9, **characterized in that** the pipe section preform is cut off after its curing.

11. A method as set forth in any of claims 7-10, **characterized in that** after being cured, the pipe section preform is split in lengthwise direction and/or is provided with a lengthwise internal slit.

12. A method as set forth in claim 11, **characterized in that** the pipe section is coated.

## Patentansprüche

1. Vorrichtung zur kontinuierlichen Herstellung eines Mineralwollerohrprofils für Isolierzwecke, wobei die Vorrichtung einen Kern und eine äußere Walzenbaugruppe umfasst, die den Kern mindestens teilweise umgibt, wobei die Walzenbaugruppe mindestens zwei Walzen enthält, die verstellbar angeordnet sind, wobei eine Mineralwollematte einer vorgegebenen Länge zwischen dem Kern und der Walzenbaugruppe um den Kern herum gewickelt werden kann, um einen Rohrprofil-Vorformling, wobei ein Ende des Kerns frei liegt, um ein geformtes Rohrprofil von dem Kern herunterzunehmen, sowie Aushärtungselemente enthält, um den Rohrprofil-Vorformling auszuhärten, bevor er von dem Kern über das freie Ende des Kerns heruntergenommen wird, wobei mindestens ein Abschnitt des Kern schraubenförmig ist, wobei das Voranschieben eines geformten Abschnitts des Rohrprofils entlang des Kerns und das letztendliche Herunterschieben von dem Kern in Reaktion auf Drehbewegungen sowohl des schraubenförmigen Abschnitts des Kerns als auch der Walzen der Walzenbaugruppe stattfinden.

2. Vorrichtung nach Anspruch 1, **dadurch gekennzeichnet, dass** das Aushärten durch Erwärmen oder mittels Mikrowellen erfolgt.

3. Vorrichtung nach Anspruch 1 oder 2, **dadurch gekennzeichnet, dass** die Vorrichtung eine oder mehrere Walzen umfasst, die auf die Schraube ausgerichtet sind oder in einem Abweichungswinkel relativ zu der Schraube angeordnet sind.

4. Vorrichtung nach einem der Ansprüche 1-3, **dadurch gekennzeichnet, dass** sie Querschneidmittel und/oder Längsspalt- und/oder -schneidmittel umfasst.

5. Vorrichtung nach einem der Ansprüche 1-4, **dadurch gekennzeichnet, dass** sie mit einer oder mehreren Mattenzufuhröffnungen versehen ist, um eine Matte um den Kern herum zuzuführen.

6. Vorrichtung nach einem der Ansprüche 1-5, **dadurch gekennzeichnet, dass** die Mineralwolle aus Steinwolle besteht.

7. Verfahren für die kontinuierliche Fertigung eines Mineralwollerohrprofils für Isolierzwecke, wobei das Verfahren Folgendes umfasst:
- Zuführen einer Mineralwollematte um einen Kern, der an einem seiner Enden frei liegt, in einer solchen Weise, dass die anschließende Mattenwicklung mindestens teilweise die vorangegangene Mattenwicklung überlappt;
- Zusammendrücken der um den Kern herum gelegten Mineralmatte gegen den Kern mittels einer äußeren Walzenbaugruppe, die aus mindestens zwei verstellbaren Walzen besteht, um einen Rohrprofil-Vorformling herzustellen;
- Aushärten des geformten Rohrprofil-Vorformlings,
wobei bei diesem Verfahren zum Zweck des Voranschiebens eines geformten Abschnitts des Rohrprofils und des letztendlichen Herunternehmens des geformten Abschnitts des Rohrprofils von dem Kern über das freie Ende des Kerns sowohl die Außenflächen als auch die Innenflächen des Rohrprofil-Vorformlings Drehbewegungen unter Verwendung eines Kerns ausgesetzt werden, von dem mindestens ein Abschnitt schraubenförmig ist, und wobei die Walzenbaugruppe aus mindestens zwei verstellbaren Walzen besteht, wobei die Walzenbaugruppe den Kern mindestens teilweise umgibt.

8. Verfahren nach Anspruch 7, **dadurch gekennzeichnet, dass** der geformte Rohrprofil-Vorformling mittels Heißluft und/oder Mikrowellen ausgehärtet wird.

9. Verfahren nach Anspruch 8, **dadurch gekennzeichnet, dass** jede Walze der Vorrichtung auf die Schraube ausgerichtet ist oder in einem Abweichungswinkel relativ zu der Schraube angeordnet ist.

10. Verfahren nach einem der Ansprüche 7-9, **dadurch gekennzeichnet, dass** der Rohrprofil-Vorformling nach seinem Aushärten abgeschnitten wird.

11. Verfahren nach einem der Ansprüche 7-10, **dadurch gekennzeichnet, dass** der Rohrprofil-Vorformling nach seinem Aushärten in Längsrichtung gespalten wird und/oder mit einem innen verlaufenden Längsschnitt versehen wird.

12. Verfahren nach Anspruch 11, **dadurch gekennzeichnet, dass** das Rohrprofil beschichtet wird.

## Revendications

1. Appareil pour produire en continu une section de conduite en laine minérale dans des applications d'isolation, ledit appareil comprenant un coeur et un ensemble de rouleaux extérieurs l'entourant au moins partiellement, ledit ensemble de rouleaux incluant au moins deux rouleaux agencés de manière à être réglables, moyennant quoi un tapis de laine minérale de longueur désignée entre le coeur et l'ensemble de rouleaux peut être enroulé autour du coeur afin de façonner une préforme d'une section de conduite, une extrémité du coeur étant dégagée afin de retirer une section de conduite façonnée du coeur, ainsi que des éléments de durcissement à chaud pour durcir le préforme de section de conduite avant un retrait du coeur hors de l'extrémité dégagée du coeur, au moins une portion du coeur étant en forme de vis, l'avancée d'une portion façonnée de la section de conduite le long du coeur et finalement hors du coeur ayant lieu en réponse aux mouvements rotatifs d'à la fois la portion en forme de vis du coeur et les rouleaux de l'ensemble de rouleaux.

2. Appareil selon la revendication 1, **caractérisé en ce que** le durcissement à chaud est conçu afin d'être effectué par chauffage ou au moyen de micro-ondes.

3. Appareil selon la revendication 1 ou 2, **caractérisé en ce que** l'appareil comprend un ou plusieurs rouleaux en alignement avec la vis ou à un angle de déviation par rapport à la vis.

4. Appareil selon une quelconque des revendications 1 à 3, **caractérisé en ce que** il comprend des moyens de découpage transversal et/ou des moyens de division et/ou de découpage longitudinal.

5. Appareil selon une quelconque des revendications 1 à 4, **caractérisé en ce que** il est pourvu d'une ou plusieurs ouvertures d'introduction de tapis pour introduire un tapis autour du coeur.

6. Appareil selon une quelconque des revendications 1 à 5, **caractérisé en ce que** la laine minérale consiste en de la laine de pierre.

7. Procédé pour façonner en continu une section de conduite en laine minérale dans des applications d'isolation, comprenant les étapes consistant à :
- introduire un tapis en laine minérale autour d'un coeur, qui est dégagé à une de ses extrémités, d'une manière telle que le chevauchement de tapis suivant se superpose au mois partiellement au chevauchement de tapis précédent,
- compresser le tapis minéral introduit autour du coeur contre le coeur au moyen d'un ensemble de rouleaux extérieurs constitué d'au moins deux rouleaux réglables pour produire une préforme de conduite de tuyau,
- durcir à chaud la préforme de section de conduite façonnée,
procédé dans lequel à des fins d'avancée d'une portion façonnée de la section de conduite et finalement de retrait de celle-ci hors de l'extrémité dégagée du coeur, à la fois les surfaces extérieures et les surfaces intérieures de la préforme de section de conduite sont soumises à des mouvements rotatifs en utilisant un coeur, dont au moins une portion est en forme de vis, et l'ensemble de rouleaux mentionné ci-dessus étant constitué d'au moins deux rouleaux réglables, ledit ensemble de rouleaux entourant au moins une partie du coeur.

8. Procédé selon la revendication 7, **caractérisé en ce que** la préforme de section de conduite façonnée est durcie à chaud au moyen d'air chaud et/ou de micro-ondes.

9. Procédé selon la revendication 8, **caractérisé en ce que** chaque rouleau de l'appareil est un alignement avec ou à un angle de déviation par rapport à la vis.

10. Procédé selon une quelconque des revendications 7 à 9, **caractérisé en ce que** la préforme de section de conduite est sectionnée après son durcissement à chaud.

11. Procédé selon une quelconque des revendications 7 à 10, **caractérisé en ce que** après avoir été durcie à chaud, la préforme de section de conduite est divisée dans la direction longitudinale et/ou est pourvue d'une fente interne longitudinale.

12. Procédé selon la revendication 11, **caractérisé en ce que** la section de conduite est pourvue d'un revêtement.
